## Europäisches Patentamt

## European Patent Office

## Office européen des brevets

(19)

(11) Veröffentlichungsnummer: **0 177 922**
**B1**

(12) **EUROPÄISCHE PATENTSCHRIFT**

(45) Veröffentlichungstag der Patentschrift:
23.08.89

(51) Int. Cl.⁴: **B25J 19/06**

(21) Anmeldenummer: 85112685.4

(22) Anmeldetag: 07.10.85

(54) **Sicherheitseinrichtung für Industrie-Roboter.**

(30) Priorität: 09.10.84 DE 3437036

(43) Veröffentlichungstag der Anmeldung:
16.04.86 Patentblatt 86/16

(45) Bekanntmachung des Hinweises auf die Patenterteilung:
23.08.89 Patentblatt 89/34

(84) Benannte Vertragsstaaten:
AT CH DE FR GB IT LI SE

(56) Entgegenhaltungen:
WO-A-84/00318
DE-A- 3 241 132
FR-A- 2 434 426
GB-A- 2 068 891

(73) Patentinhaber: **Siemens Aktiengesellschaft,
Wittelsbacherplatz 2, D-8000 München 2(DE)**

(72) Erfinder: **Kohler, Gerd, Dipl.-Ing. TU/FH,
Romanstrasse 1A, D-8000 München 19(DE)**
Erfinder: **Burger, Rudolf, Sipplingerstrasse 12,
D-8000 München 60(DE)**

## Beschreibung

Die Erfindung betrifft eine Sicherheitseinrichtung für Industrie-Roboter nach dem Oberbegriff des Anspruchs 1.

Beim Betrieb und insbesondere beim Programmieren von Industrie-Robotern (IR) kommt es, verursacht durch Fehler der IR-Steuerung oder Bedienfehler des Programmierers, zu Kollisionen des Greifers des IR mit der Peripherie. Dabei können Beschädigungen am Greifer oder an der Peripherie oder an beiden auftreten.

Es gibt Überlastsicherungen in den Steuerungen der IR, die unter Umständen zu spät oder gar nicht ansprechen. Im allgemeinen dienen diese Sicherungen dem Schutz der Antriebe des IR. Empfindliche Greifer werden daher beschädigt, ehe diese Sicherungen ansprechen.

Eine andere Lösung ist eine Sollbruchstelle zwischen IR- Flansch und Greifer.

In der Patentanmeldung DE-A 3 323 979.1 (EP-A 140 036) ist eine Sicherheitseinrichtung beschrieben, die dann anspricht, wenn Momente oder Zugkräfte über den Greifer des IR auf den Sicherheitsflansch einwirken. Die Verbindung zwischen IR und Werkzeug erfolgt über mindestens drei Flansche. Dabei sind zwei der Flansche derart nachgiebig miteinander verbunden, daß sie bei einer bestimmten, auf das Werkzeug ausgeübten Querkraft relativ zueinander kippen und dadurch eine Schalteinrichtung zum Ausschalten des IR betätigen.

In der DE-A 3 241 132 ist eine Sicherheitseinrichtung für einen Industrieroboter beschrieben, der nur auf Druck und Kippmomente reagiert. Dazu weist diese Sicherheitseinrichtung einen Sicherheitsflansch auf, den eine Feder, die sich auf eine Platte abstützt, mit einem Zuganker auf auf einem Teilkreis angeordnete Stifte ziehen. Auf dem dem IR zugewandten Ende des Zugankers ist ein Betätigungselement (Flanschkopf) in Zusammenhang mit einem Schalter angeordnet.

Der Erfindung liegt die Aufgabe zugrunde, eine Sicherheitseinrichtung zu konzipieren, die beim Einwirken von Zug- und Druckkräften, ferner Biege- und Torsionsmomenten auf den Flansch des IR eine Schalteinrichtung zum Ausschalten des IR betätigt.

Diese Aufgabe wird bei einer gattungsgemäßen Sicherheitseinrichtung durch das kennzeichnende Merkmal des Patentanspruchs gelöst. Von Vorteil ist, daß die Federn der Stifte entsprechend unterschiedlichen Beanspruchungen des Greifers und damit des Sicherheitsflansches zueinander auch unterschiedlich eingestellt werden können.

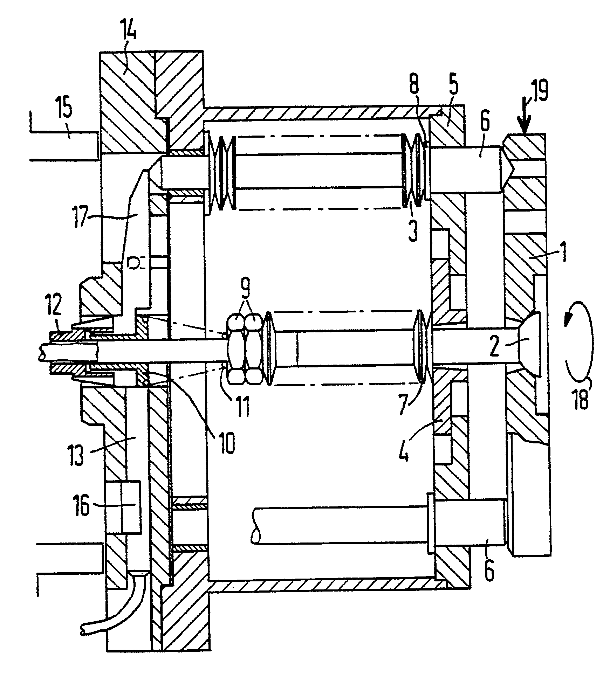

Die Erfindung wird anhand der Figur erläutert, die eine Sicherheitseinrichtung im Schnitt zeigt:

Ein Sicherheitsflansch 1 wird mit einem Zuganker 2 durch Federn 7 (Tellerfedern), die sich auf Platten 4 und 5 abstützen, auf die auf einem Teilkreis angeordneten Stifte 6 gezogen. Beim dargestellten Ausführungsbeispiel handelt es sich um vier Stifte.

Die Enden der Stifte 6, auf die der Flansch 1 gezogen wird, sind konisch (gegebenenfalls kugelförmig oder ballig) ausgebildet.

Die Stifte 6 sind axial verschiebbar gelagert und werden durch vorgespannte Federn 3 (hier Tellerfedern) gegen die Platte 5 gedrückt. Die Abstimmung der Federpakete 7 und 3, das heißt sowohl vom Zuganker 2 als auch von den Stiften 6, wird so vorgenommen, daß die Stifte 6 mit ihrem Bund 8 immer gegen die Platte 5 drücken.

Die Abstimmung der Federn 3 für die Stifte 6 erfolgt über Anzahl, Art und Schichtung der Tellerfedern. Die Abstimmung der Federn 7 des Zugankers 2 kann außerdem noch über die beiden Muttern 9 erfolgen. Auf dem linken Ende des Zugankers 2 sitzt ein Betätigungselement 10, das über die Feder 11 gegen das Gleitstück 12 gedrückt wird. Die Position des Betätigungselementes 10 auf dem Zuganker 2 wird durch das Gleitstück 12 eingestellt.

Das Betätigungselement 10 bedämpft einen berührungslosen Schalter 13. Über einen Flansch 14 wird die Sicherheitseinrichtung mit einem Flansch 15 des nicht dargestellten IR verbunden. Mit 16 ist eine Klemmeinrichtung bezeichnet, mit der der Abstand des berührungslosen Schalters 13 zum Betätigungselement 10 eingestellt wird. 17 ist ein Betätigungshebel, der die Bewegung der Stifte 6 auf das Betätigungselement 10 überträgt.

Bei Einwirkung von Zugkräften und Biegemomenten auf den Sicherheitsflansch 1 wird der Zuganker 2 und damit das Betätigungselement 10 nach rechts verschoben. Der berührungslose Schalter 13 schaltet durch, womit zum Beispiel "NOT-AUS" ausgelöst werden kann.

Bei Einwirkung eines Torsionsmomentes, das mit dem Pfeil 18 schematisch angedeutet ist, oder Querkräften 19, wird der Sicherheitsflansch 1 über die konischen Spitzen der Stifte 6 angehoben und damit das Betätigungselement 10 verschoben.

Bei Einwirkung von Druckkräften auf den Sicherheitsflansch 1 federn die Stifte 6 ein und bewirken über die Hebel 17 ein Verschieben des Betätigungselementes 10.

Das Torsionsmoment, bei dem die Sicherheitseinrichtung anspricht, wird durch die Vorspannung und Kennlinie der Tellerfedern 7 des Zugankers 2 und die Kegelwinkel der konischen Enden der Stifte 6 bestimmt.

Die Kräfte und Momente, bei denen die Sicherheitseinrichtung anspricht, werden über Vorspannung und Kennlinien der Tellerfedern 7 vom Zuganker 2 und den Tellerfedern 3 der Stifte 6 eingestellt.

## Patentansprüche

1. Sicherheitseinrichtung für IR zum Schutz vor Kollisionsfolgen beim Betrieb und beim Programmieren, die über einen Flansch mit dem IR verbunden ist, daß ferner ein Sicherheitsflansch vorgesehen ist, den eine Feder, die sich auf einer Platte abstützt, mit einem Zuganker auf auf einem Teilkreis angeordnete Stifte zieht, und daß auf dem dem IR zugewendeten Ende des Zugankers ein Betätigungselement in Zusammenhang mit einem Schalter angeordnet ist, dadurch gekennzeichnet, daß der Sicherheitsflansch (1) aus einer stabilen, definierten Ausgangsposition unter anderem sowohl in Richtung auf den Roboterflansch (15) als auch von diesem weg in Gegenrichtung bei Einwirkung entsprechender Kräfte bewegt wird und daß die Abstimmung von Federpaketen bestehend aus Federn (7), die sich auf Platten (4, 5) abstützen und vorgespannten Federn (3), die die Stifte (6) gegen die Platte (5) drücken, vom Zuganker (2) als auch von den Stiften (6) so vorgenommen wird, daß die Stifte (6) mit ihrem Bund (8) immer gegen die Platte (5) drücken und beim Einwirken von Zug und Druckkräften, Biege- und Torsionsmomenten (18) sowie Querkräften (19) auf den Sicherheitsflansch (1) die Schalteinrichtung (13) zum Ausschalten des IR betätigen.

2. Sicherheitseinrichtung nach Anspruch 1, dadurch gekennzeichnet, daß die Enden der Stifte (6), auf die der Sicherheitsflansch (1) gezogen wird, konisch ausgebildet und axial verschiebbar gelagert sind und daß sie vorgespannte Federn (3) gegen die Platte (5) drücken, an dem die Stifte mit einem Bund (8) anliegen.

3. Sicherheitseinrichtung nach Anspruch 1, dadurch gekennzeichnet, daß eine Feder (11) das Betätigungselement (10) gegen das Gleitstück (12) und/oder gegen die Betätigungshebel (17) drücken.

4. Sicherheitseinrichtung nach Anspruch 1, dadurch gekennzeichnet, daß die Vorspannkraft des Zugankers (2) durch unterschiedliche Spannungen von Tellerfedern (7) mit Hilfe von zwei gegeneinander zu konternden Muttern (9) einstellbar ist.

5. Sicherheitseinrichtung nach Anspruch 1, dadurch gekennzeichnet, daß die Vorspannkraft der Federn (3) für die Stifte (6) über Anzahl, Art und Schichtung der Tellerfedern erfolgt.

**Claims**

1. Safety device for an industrial robot for protection against the consequences of collision during operation and during programming, which is connected to the industrial robot via a flange, a safety flange further being provided which a spring, which is supported on a plate, pulls a tie-bolt onto pins arranged on a circular arc, an actuating element being arranged in conjunction with a switch on the end of the tie bolt facing the industrial robot, characterised in that, under the action of appropriate forces, the safety flange (1) is moved from a stable definite starting position inter alia both in the direction towards the robot flange (15) and also in the opposite direction away from the latter, and in that the setting of spring assemblies consisting of springs (7), which are supported on plates (4, 5), and preloaded springs (3), which press the pins (6) against the plate (5), is done by the tie-bolt (2) and also by the pins (6) in such a way that the pins (6) always press against the plate (5) with their collar (8) and under the action of tensile forces and compressor forces, bending moments and torsional moments (18) as well as transverse forces (19) on the safety flange (1), actuating the switching device (13) to switch off the industrial robot.

2. Safety device according to Claim 1, characterised in that the ends of the pins (6) onto which the safety flange (1) is pulled are constructed conically and are mounted axially displaceably, and in that the pre-loaded springs (3) press against the plate (5) against which the pins bear with a collar (8).

3. Safety device according to Claim 1, characterised in that a spring (11) presses the actuating element (10) against the slider (12) and/or against the actuating lever (17).

4. Safety device according to Claim 1, characterised in that the preloading force of the tie-bolt (2) can be adjusted by different loadings of plate springs (7) with the aid of two nuts (9) to be locked against one another.

5. Safety device according to Claim 1, characterised in that the preloading force of the springs (3) for the pins (6) results from the number, type and lamination of the plate springs.

**Revendications**

1. Dispositif de sécurité pour robot industriel, servant à la protection contre les conséquences de collisions pendant le fonctionnement et lors de la programmation, dispositif qui est relié par une bride au robot et qui comporte, en plus, une bride de sûreté qu'un ressort, prenant appui sur une plaque, tire au moyen d'un tirant contre des tiges disposées sur un cercle, de même qu'un élément de commande disposé en combinaison avec un interrupteur sur l'extrémité du tirant dirigée vers le robot, caractérisé en ce que la bride de sûreté (1) est déplaçable à partir d'une position de départ définie stable, notamment en direction de la bride (15) du robot et dans la direction contraire, en s'éloignant de cette bride, lorsque la bride de sûreté (1) est sollicitée par des efforts dépassant une certaine ampleur, et que l'ajustement d'empilages de ressorts, constitués de ressorts (7) prenant appui sur des plaques (4, 5) et de ressorts (3) précontraints qui pressent les tiges (6) contre la plaque (5), ressorts qui sont coordonnés à la fois au tirant (2) et aux tiges (6), est réalisé de manière que les tiges (6) soient toujours pressées contre la plaque (5) par un collet (8) de ces tiges et qu'elles agissent sur un organe de commutation (13) pour provoquer l'arrêt du robot lorsque des efforts de traction ou de compression, des couples de flexion ou de torsion (18), de même que des efforts transversaux (19) d'une certaine ampleur sont appliqués à la bride de sûreté (1).

2. Dispositif selon la revendication 1, caractérisé en ce que les extrémités des tiges (6), contre lesquelles est tirée la bride de sûreté (1), ont une forme conique et sont axialement déplaçables et que des ressorts (3) précontraints pressent les tiges contre la plaque (5) par un collet (8) des tiges.

3. Dispositif selon la revendication 1, caractérisé en ce qu'un ressort (11) presse l'élément de commande (10) contre une pièce coulissante (12) et/ou contre des leviers de commande (17).

4. Dispositif selon la revendication 1, caractérisé en ce que la force de précontrainte du tirant (2) est réglable par la variation de la tension de ressorts à disques (7) à l'aide de deux écrous (9) pouvant être bloqués l'un contre l'autre.

5. Dispositif selon la revendication 1, caractérisé en ce que la force de précontrainte des ressorts (3) des tiges (6) est ajustable par la variation du nombre, du type et de l'empilement des ressorts à disques.